# EUROPEAN PATENT SPECIFICATION

(11) **EP 1 500 328 B1**
(45) Date of publication and mention of the grant of the patent: **19.09.2007**
(21) Application number: 04077968.8
(22) Date of filing: 18.07.2000
(51) Int. Cl.: A01K 13/00, A01K 1/00, A01K 1/12, A01K 1/02

(54) **A method of luring an animal to a predetermined place**
Verfahren zum Anlocken eines Tieres zu einem vorbestimmten Ort
Procédé permettant d'attirer un animal en un lieu déterminé

(30) Priority: 11.08.1999 NL 1012808
(43) Date of publication of application: 26.01.2005
(62) Divisional of application: 00948410.6
(73) Proprietor: Lely Enterprises AG, 6300 ZUG (CH)
(72) Inventor: Van den Berg, Karel, 2971 BR Bleskensgraaf (NL); Verburg, Carlo, 2651 BP Berkel En Rodenrijs (NL); Fransen, Renatus Ignatius Josephus, 3135 ZD Vlaardingen (NL); Van der Lely, Alexander, 3065 NA Rotterdam (NL)
(74) Representative: Corten, Maurice Jean F.M.

(56) References cited:
- EP-A- 0 728 413
- WO-A-96/19917
- WO-A-97/43897
- WO-A-98/04121
- GB-A- 2 313 032
- US-A- 4 693 852

## Description

The invention relates to a method of luring an animal to a predetermined place, such as e.g. a milking stall and/or a feeding stall, where the animal lured undergoes a predetermined treatment, and/or where a predetermined animal-related action, such as e.g. milking and/or feeding, is performed, whereby at least during a predetermined stage of the treatment and/or the action, at least one previously defined climate parameter is set artificially in at least one part of the relevant place.

Such a method is known from WO-A-98/04121.

In the known method, the animal is lured to the milking stall by means of artificially setting a climate parameter.

In accordance with the invention, the method comprises the features of claim 1.

According to a preferred feature, the degree of humidity is regulated and, more in particular, increased. According to a preferred aspect of the invention, increasing the degree of humidity can be realized by applying liquid between the hairs and/or on the skin. This can be achieved more in particular by atomizing the liquid to a fine spray and subsequently dispersing same. According to an inventive feature, it is also possible to apply the liquid directly between the hairs and/or on the skin of the animal by rubbing and/or brushing. Especially during warm weather this has proved to be a pleasant experience for the animals. In order to avoid the use of too much liquid for wetting the animal, according to a preferred inventive feature, a maximum amount of liquid to be used for wetting the animal is previously fixed. According to another preferred feature, during wetting the animal it is checked whether droplets are formed on the animal's skin or fall from the animal. According to a further preferred feature, wetting of the animal is stopped if formation of droplets is ascertained. Formation of droplets is not only disadvantageous to the liquid consumption, but may also result in certain parts, such as e.g. the teats, of the animal being undesirably wetted by the liquid. By evaporation of the liquid on the skin or between the hairs of the animal, the animal cools off. According to a preferred feature of the invention, in particular the animal's back is cooled.

In accordance with another preferred feature, the air flow is regulated. More in particular the air flow is forcibly increased, e.g. by means of a ventilator. By causing the forced air to flow over the wetted surface of the animal, an even quicker cooling of the animal is achieved. Therefore, a preferred feature of the invention also relates to a method in which first the degree of humidity is increased, as described in the foregoing, and then the air flow is regulated, which is also described in the foregoing.

For the purpose of being able to check and/or control the cooling process, according to a preferred feature, during and/or after regulation of the climate parameter, at least the temperature, in particular the temperature of the skin and/or the body and/or the ambient temperature in the vicinity of the animal, is determined. According to a further preferred feature, cooling of the animal is stopped when a previously set temperature is reached. For the purpose of being able to follow cooling even more accurately, according to an inventive feature, the animal's behaviour is observed during cooling, and cooling is stopped if the animal's behaviour changes. According to a further preferred feature, the animal's behaviour can be deduced from deviations from the number of movements of the animal per unit of time.

According to again another inventive feature, regulation of the climate parameters is performed during a previously fixed duration. According to a further preferred feature, the duration is adjustable. The duration of the treatment can also be calculated on the basis of historical data about previous actions related to the relevant animal. According to a preferred aspect of the invention, this calculation can be made on the basis of the duration of milkings and/or pre-treatments and/or post-treatments of the relevant animal. According to again another preferred feature, regulation of one of the climate parameters is stopped when approximately three quarters of the action and/or the treatment has been performed. The latter measure is of importance to ensure that the animal leaves the stall after the action and/or the treatment has ended. If regulation of the climate parameters continues throughout the action and/or the treatment, this results in the animal only leaving the place well after the action and/or the treatment has ended. This may be very disadvantageous e.g. when milking is carried out by means of a milking robot, as it results in capacity reduction of the milking robot.

In accordance with a further preferred feature, during regulation of one of the climate parameters certain parts of the animal are shielded. More in particular the animal's head and the udder and/or the teats are shielded.

The invention will now be explained in further detail with reference to the accompanying drawings, in which
Figure 1 is a side view of a first embodiment of an implement for performing the method of the invention, and
Figure 2 is a second embodiment of an implement for performing the method of the invention.

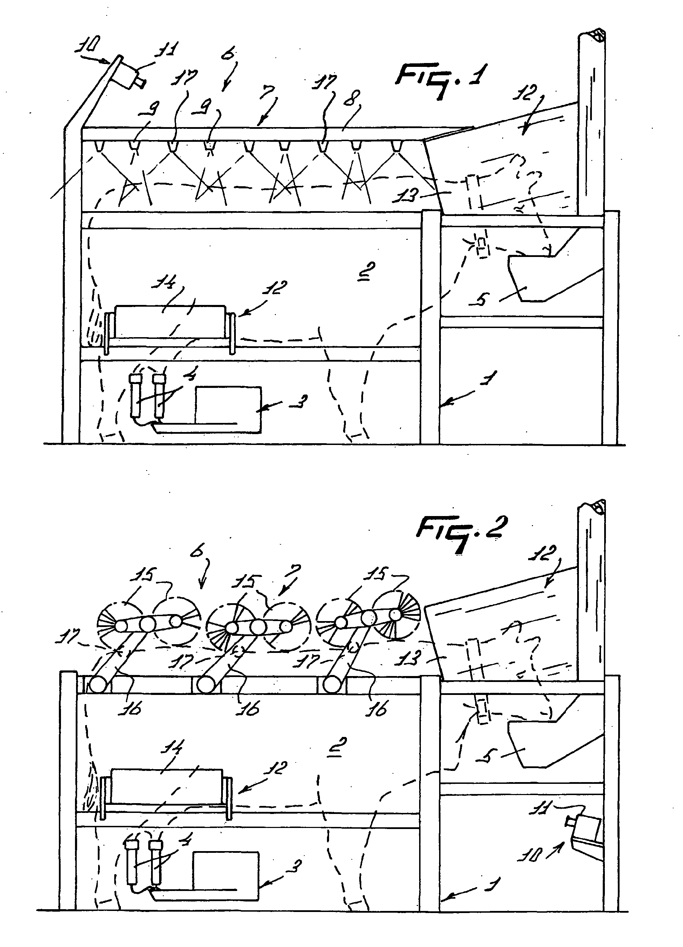

Figure 1 is a side view of a milk box 1 with a cow 2 present therein. The milk box 1 comprises a milking robot 3 with teat cups 4 which are connected automatically to the teats of the cow 2 by means of the milking robot 3. Near the front side of the milk box 1 there is further disposed a feeding trough 5 to which concentrate can be supplied in metered portions. The milk box 1 is further provided with regulating means 6 with the aid of which at least one previously defined climate parameter is set artificially in the milk box 1. The regulating means 6 comprise wetting means 7 with the aid of which at least the back of the cow 2 is wetted. The wetting means 7 comprise a sprayer beam 8 with nozzles 9, by means of which a liquid can be atomized to a fine spray. After the liquid reduced to a fine spray has been applied to the back of the cow 2, air is directed over the wetted surface by means of the sprayer beam 8 and the nozzles 9. In this manner the back of the cow 2 is cooled. During wetting of the cow 2 it is checked with the aid of the detection means 10 whether or not formation of droplets occurs. To that end the detection means 10 comprise a camera 11. In order to prevent certain parts of the cow 2 from coming into contact with the liquid, the milk box 1 is further provided with shielding means 12. In the present embodiment the shielding means 12 comprise a transparent shielding cap 13 which covers the head of the cow 2 during wetting. The shielding means 12 further comprise a second shielding cap 14 by means of which the udder of the cow 2 can be shielded. The second shielding cap 14 is pivotably fitted to the milk box 1.

Figure 2 shows a second embodiment, in which parts corresponding to those of the first embodiment are indicated by the same reference numerals. In the second embodiment, the wetting means 7 comprise motor-drivable brushes 15 which are provided with (non-shown) liquid supply means with the aid of which liquid can be supplied to the brushes during brushing. Thus, the liquid is rubbed in the hair of the cow 2 by means of the brushes 15. The motor-drivable brushes 15 are disposed on a pivotable arm 16 which is connected to the milk box 1. The pivotable arm 16 is further provided with air displacing means 17 with the aid of which air is directed over the wetted surface of the cow 2 after or during brushing.

## Claims

1. A method of luring an animal to a predetermined place, such as e.g. a milking stall and/or a feeding stall, where the animal lured undergoes a predetermined treatment, and/or a predetermined animal-related action, such as e.g. milking and/or feeding, is performed, whereby, at least during a predetermined stage of the treatment and/or the action, at least one previously defined climate parameter is set artificially in at least one part of the relevant place, **characterized in that** a liquid is applied between the hairs and/or on the skin of the animal, and **in that** during cooling the animal's behaviour is observed, and cooling is stopped if the animal's behaviour changes and that regulation of the climate parameter is performed during a previously fixed duration of the action and/or the treatment.

2. A method as claimed in claim 1, **characterized in that** the animal's behaviour is deduced from deviations from the number of movements of the animal per unit of time.

3. A method as claimed in claim 1 or 2, **characterized in that** cooling of the animal is stopped when a previously set temperature is reached.

4. A method as claimed in any one of the preceding claims, **characterized in that** the degree of humidity is regulated.

5. A method as claimed in claim 4, **characterized in that** the degree of humidity is increased.

6. A method as claimed in claim 5, **characterized in that** the degree of humidity is regulated by atomizing a liquid to a fine spray and by dispersing same.

7. A method as claimed in claim 5 or 6, **characterized in that** the liquid is directly applied between the hairs and/or on the skin of the animal by rubbing and/or brushing.

8. A method as claimed in any one of the preceding claims, **characterized in that** for wetting an animal a previously fixed maximum amount of liquid is used per animal.

9. A method as claimed in any one of the preceding claims, **characterized in that** during wetting the animal it is checked whether droplets are formed on the animal's skin or fall from the animal.

10. A method as claimed in any one of the preceding claims, **characterized in that** wetting of the animal is stopped if formation of droplets is ascertained.

11. A method as claimed in any one of the preceding claims, **characterized in that** the back of the animal is cooled.

12. A method as claimed in any one of the preceding claims, **characterized in that** the air flow is regulated.

13. A method as claimed in claim 12, **characterized in that** the air flow is forced and increased by means of e.g. a ventilator.

14. A method as claimed in any one of the preceding claims, **characterized in that** first the degree of humidity is increased, as described in any one of claims 1 to 10, and then the air flow is regulated and/or forced, as described in claim 11 or 12.

15. A method as claimed in any one of the preceding claims, **characterized in that** during and/or after regulation of the climate parameters at least the temperature, in particular the temperature of the skin and/or the body and/or the ambient temperature in the vicinity of the animal, is determined.

16. A method as claimed in claim 1, **characterized in that** the duration is adjustable.

17. A method as claimed in claim 1 or 16, **characterized in that** the duration of the action and/or the treatment is calculated on the basis of historical data about previous actions related to the relevant animal.

18. A method as claimed in claim 17, **characterized in that** this calculation is made on the basis of the duration of milkings and/or pre-treatments and/or post-treatments of the relevant animal.

19. A method as claimed in any one of claims 1 to 18, **characterized in that** regulation of one of the climate parameters is stopped when approximately three quarters of the action and/or the treatment has been performed.

20. A method as claimed in any one of the preceding claims, **characterized in that** during regulation of one of the climate parameters certain parts of the animal are shielded.

## Patentansprüche

1. Verfahren zum Locken eines Tieres an einen vorgegebenen Ort, wie z. B. eine Melkbox und/oder eine Fütterungsbox, wo das angelockte Tier einer vorgegebenen Behandlung unterzogen wird und/oder eine vorgegebene tierbezogene Maßnahme, wie z. B. Melken und/oder Füttern, durchgeführt wird, wobei zumindest während einer vorgegebenen Phase der Behandlung und/oder der Maßnahme mindestens ein zuvor definierter Klimaparameter in mindestens einem Teil des betreffenden Ortes künstlich eingestellt wird,
**dadurch gekennzeichnet, dass** eine Flüssigkeit zwischen die Haare und/oder auf die Haut des Tieres befördert wird, und dass während des Kühlens das Verhalten des Tieres beobachtet und das Kühlen beendet wird, wenn sich das Verhalten des Tieres ändert, und dass die Regelung des Klimaparameters während einer zuvor festgelegten Dauer der Maßnahme und/oder der Behandlung erfolgt.

2. Verfahren nach Anspruch 1,
**dadurch gekennzeichnet, dass** das Verhalten des Tieres von Abweichungen von der Anzahl der Bewegungen des Tieres pro Zeiteinheit abgeleitet wird.

3. Verfahren nach Anspruch 1 oder 2,
**dadurch gekennzeichnet, dass** das Kühlen des Tieres beendet wird, wenn eine voreingestellte Temperatur erreicht ist.

4. Verfahren nach einem der vorhergehenden Ansprüche,
**dadurch gekennzeichnet, dass** der Grad der Feuchtigkeit geregelt wird.

5. Verfahren nach Anspruch 4,
**dadurch gekennzeichnet, dass** der Grad der Feuchtigkeit erhöht wird.

6. Verfahren nach Anspruch 5,
**dadurch gekennzeichnet, dass** der Grad der Feuchtigkeit **dadurch** geregelt wird, dass eine Flüssigkeit zu einem feinen Sprühnebel zerstäubt und dieser verteilt wird.

7. Verfahren nach Anspruch 5 oder 6,
**dadurch gekennzeichnet, dass** die Flüssigkeit durch Reiben und/oder Bürsten direkt zwischen die Haare und/oder auf die Haut des Tieres befördert wird.

8. Verfahren nach einem der vorhergehenden Ansprüche,
**dadurch gekennzeichnet, dass** zum Befeuchten eines. Tieres eine zuvor festgelegte, maximale Flüssigkeitsmenge pro Tier verwendet wird.

9. Verfahren nach einem der vorhergehenden Ansprüche,
**dadurch gekennzeichnet, dass** während des Befeuchtens des Tieres geprüft wird, ob sich auf der Haut des Tieres Tröpfchen bilden oder von dem Tier herabfallen.

10. Verfahren nach einem der vorhergehenden Ansprüche,
**dadurch gekennzeichnet, dass** das Befeuchten des Tieres beendet wird, wenn die Bildung von Tröpfchen festgestellt wird.

11. Verfahren nach einem der vorhergehenden Ansprüche,
**dadurch gekennzeichnet, dass** der Rücken des Tieres gekühlt wird.

12. Verfahren nach einem der vorhergehenden Ansprüche,
**dadurch gekennzeichnet, dass** der Luftstrom geregelt wird.

13. Verfahren nach Anspruch 12,
**dadurch gekennzeichnet, dass** der Luftstrom, z. B. mittels eines Ventilators, erzeugt und verstärkt wird.

14. Verfahren nach einem der vorhergehenden Ansprüche,
**dadurch gekennzeichnet, dass** zuerst der Grad der Feuchtigkeit erhöht wird, wie in einem der Ansprüche 1 bis 10 beschrieben, und dann der Luftstrom erzeugt und/oder geregelt wird, wie in Anspruch 11 oder 12 beschrieben.

15. Verfahren nach einem der vorhergehenden Ansprüche,
**dadurch gekennzeichnet, dass** während und/oder nach dem Regeln der Klimaparameter zumindest die Temperatur, insbesondere die Temperatur der Haut und/oder des Körpers und/oder die Umgebungstemperatur in der Nähe des Tieres, ermittelt wird.

16. Verfahren nach Anspruch 1,
**dadurch gekennzeichnet, dass** die Dauer einstellbar ist.

17. Verfahren nach Anspruch 1 oder 16,
**dadurch gekennzeichnet, dass** die Dauer der Maßnahme und/oder der Behandlung auf der Basis von historischen Daten über frühere Maßnahmen bezüglich des betreffenden Tieres berechnet wird.

18. Verfahren nach Anspruch 17,
**dadurch gekennzeichnet, dass** diese Berechnung auf der Basis der Dauer von Melkvorgängen und/oder Vorbehandlungen und/oder Nachbehandlungen des betreffenden Tieres erfolgt.

19. Verfahren nach einem der Ansprüche 1 bis 18,
**dadurch gekennzeichnet, dass** das Regeln eines der Klimaparameter beendet wird, wenn etwa Dreiviertel der Maßnahme und/oder der Behandlung durchgeführt sind.

20. Verfahren nach einem der vorhergehenden Ansprüche,
**dadurch gekennzeichnet, dass** während der Regelung eines der Klimaparameter bestimmte Teile des Tieres abgeschirmt sind.

## Revendications

1. Procédé consistant à attirer un animal jusqu'à un emplacement prédéterminé, tel que par exemple une stalle de traite et/ou une stalle d'alimentation, où l'animal attiré subit un traitement prédéterminé, et/ou une action prédéterminée connexe à un animal, telle que par exemple la traite et/ou l'alimentation, est réalisée, moyennant quoi, au moins au cours d'une étape prédéterminée du traitement et/ou de l'action, au moins un paramètre climatique défini auparavant est établi artificiellement dans au moins une partie de l'emplacement en question, **caractérisé en ce qu'**un liquide est appliqué entre les poils et/ou sur la peau de l'animal, et **en ce qu'**au cours du refroidissement le comportement de l'animal est observé, et le refroidissement est arrêté si le comportement de l'animal change et cette régulation du paramètre climatique est réalisée au cours d'une durée fixée auparavant de l'action et/ou du traitement.

2. Procédé selon la revendication 1, **caractérisé en ce que** le comportement de l'animal est déduit à partir d'écarts par rapport au nombre de mouvements de l'animal par unité de temps.

3. Procédé selon la revendication 1 ou 2, **caractérisé en ce que** le refroidissement de l'animal est arrêté lorsqu'une température réglée auparavant est atteinte.

4. Procédé selon l'une quelconque des revendications précédentes, **caractérisé en ce que** le degré d'humidité est régulé.

5. Procédé selon la revendication 4, **caractérisé en ce que** le degré d'humidité est augmenté.

6. Procédé selon la revendication 5, **caractérisé en ce que** le degré d'humidité est régulé en atomisant un liquide en une fine pulvérisation et en distribuant celle-ci.

7. Procédé selon la revendication 5 ou 6, **caractérisé en ce que** le liquide est directement appliqué entre les poils et/ou sur la peau de l'animal en frottant et/ou en brossant.

8. Procédé selon l'une quelconque des revendications précédentes, **caractérisé en ce que** pour arroser un animal une quantité maximum de liquide fixée auparavant est utilisée pour chaque animal.

9. Procédé selon l'une quelconque des revendications précédentes, **caractérisé en ce qu'**au cours de l'arrosage de l'animal, il est contrôlé si des gouttelettes sont formées sur la peau de l'animal ou tombent à partir de l'animal.

10. Procédé selon l'une quelconque des revendications précédentes, **caractérisé en ce que** l'arrosage de l'animal est arrêté si une formation de gouttelettes est déterminée.

11. Procédé selon l'une quelconque des revendications précédentes, **caractérisé en ce que** le dos de l'animal est refroidi.

12. Procédé selon l'une quelconque des revendications précédentes, **caractérisé en ce que** l'écoulement d'air est régulé.

13. Procédé selon la revendication 12, **caractérisé en ce que** l'écoulement d'air est forcé et augmenté au moyen, par exemple, d'un ventilateur.

14. Procédé selon l'une quelconque des revendications précédentes, **caractérisé en ce que** le degré d'humidité est d'abord augmenté, comme cela est décrit dans l'une quelconque des revendications 1 à 10, et ensuite l'écoulement d'air est régulé et/ou forcé, comme cela est décrit dans la revendication 11 ou 12.

15. Procédé selon l'une quelconque des revendications précédentes, **caractérisé en ce qu'**au cours de et/ou après la régulation des paramètres climatiques au moins la température, en particulier la température de la peau et/ou du corps et/ou la température ambiante dans le voisinage de l'animal, est déterminée.

16. Procédé selon la revendication 1, **caractérisé en ce que** la durée est réglable.

17. Procédé selon la revendication 1 ou 16, **caractérisé en ce que** la durée de l'action et/ou du traitement est calculée sur la base de données historiques concernant des actions antérieures connexes à l'animal en question.

18. Procédé selon la revendication 17, **caractérisé en ce que** ce calcul est réalisé sur la base de la durée de traites et/ou de pré-traitements et/ou de post-traitements de l'animal en question.

19. Procédé selon l'une quelconque des revendications 1 à 18, **caractérisé en ce que** la régulation d'un des paramètres climatiques est arrêtée lorsque approximativement les trois quarts de l'action et/ou du traitement ont été réalisés.

20. Procédé selon l'une quelconque des revendications précédentes, **caractérisé en ce qu'**au cours de régulation d'un des paramètres climatiques certaines parties de l'animal sont protégées.
